# EUROPÄISCHE PATENTANMELDUNG

(11) **EP 1 584 656 A1**
(43) Veröffentlichungstag der Anmeldung: **12.10.2005**
(21) Anmeldenummer: 04008558.1
(22) Anmeldetag: 08.04.2004
(51) Int. Cl.: C08L 61/04, C08L 61/06, C08L 61/16, C08L 67/06, C08L 67/08, C09D 161/04, C09D 161/06, C09D 161/16, C09D 167/06, C09D 167/08

(54) **Phenolharze enthaltende Mischungen für Innenschutzlacke**

(71) Anmelder: Surface Specialities Austria GmbH, 8402 Werndorf (AT)
(72) Erfinder: Die Erfindernennung liegt noch nicht vor
(74) Vertreter: Deckers, Hellmuth Alexander

(57) **Zusammenfassung**

Mischungen enthaltend Phenolharze **B** und verzweigte hochmolekulare olefinisch ungesättigte Polyester **A** mit freien Carboxylgruppen, Verfahren zu ihrer Herstellung und ihre Verwendung als Beschichtungsmittel zur Innenbeschichtung von Lebensmittelbehältern

## Beschreibung

Die Erfindung betrifft Phenolharze enthaltende Mischungen für Innenschutzlacke.

Bisher werden für die Innenlackierung von Blechemballagen, die mit Lebensmitteln befüllt werden, nahezu ausschließlich Kombinationen aus Phenolharzen und Epoxidharzen verwendet. Die in diesem Bereich eingesetzten Epoxidharze basieren auf 2,2-Bis-(4-hydroxyphenyl)-propan-bis-(2,3-epoxypropyl)-äther (Trivialname: Bisphenol A- diglycidyläther, abgekürzt "BADGE").

BADGE steht im Verdacht, die Gesundheit zu schädigen. Vor diesem Hintergrund wurde in der EU-Direktive 2002/16/EC festgeschrieben, daß der Einsatz oder die Gegenwart von BADGE bei der Herstellung von Materialien, die für den Lebensmittelkontakt gedacht sind, nach dem 31.12.2004 verboten wird.

Lackierungen, die ausschließlich auf Phenolharzen basieren, weisen nicht die erforderliche Kombination von guter Haftung auf metallischen Substraten, hoher Elastizität gegenüber Verformung und Stabilität gegenüber den Inhaltsstoffen der zu verpackenden Lebensmittel auf.

Es besteht daher die Aufgabe, für die Innenlackierung von Behältern, die mit Lebensmitteln in Kontakt kommen, einen Lack enthaltend eine Phenolharz-Formulierung zur Verfügung zu stellen, bei deren Herstellung keine BADGE-haltigen Stoffe oder durch Umsetzung von BADGE mit weiteren Substanzen hergestellten Stoffe benutzt werden.

Die Aufgabe wird gelöst durch Lacke basierend auf Phenolharze **B** enthaltenden Mischungen, die als weiteren Mischungsbestandteil verzweigte hochmolekulare olefinisch ungesättigte Polyester **A** mit freien Carboxylgruppen enthalten.

Als "hochmolekulare" Polyester werden hier solche bezeichnet, deren Viskosität in einer 60 % igen Lösung in Butylglykol bei 23 °C und 25 s⁻¹ gemessen nach DIN-EN ISO 3219 mindestens 500 mPa·s, bevorzugt mindestens 600 mPa·s beträgt.

Dabei verhält sich in der Mischung die Masse m(**A**) des Polyesters **A** zur Masse m(**B**) der Phenolharze **B** wie (50 bis 90) : (50 bis 10), vorzugsweise (60 bis 80) : (40 bis 20).

Bevorzugt haben die erfindungsgemäßen Polyester A eine Säurezahl von 15 mg/g bis 200 mg/g, besonders bevorzugt 25 mg/g bis 150 mg/g und insbesondere 35 mg/g bis 100 mg/g. Ihre Hydroxylzahl beträgt bevorzugt 20 mg/g bis 200 mg/g, besonders bevorzugt 30 mg/g bis 180 mg/g und insbesondere 40 mg/g bis 150 mg/g.

Die Säurezahl ist gemäß DIN EN ISO 3682 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Hydroxylzahl ist gemäß DIN EN ISO 4629 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die erfindungsgemäßen Mischungen heben sich von Phenolharz-Epoxidharz-Kombinationen dadurch ab, daß sie bei ungefähr gleichen anwendungstechnischen Eigenschaften absolut frei von BADGE sind. Im Vergleich zu Epoxidharz/Melaminharz-Systemen zeichnen sie sich durch eine weitaus höhere Beständigkeit gegen im Lebensmittelbereich eingesetzte Füllgüter auch während der häufig notwendigen Sterilisation aus.

Die Polyester **A** werden in einer mehrstufigen Reaktion hergestellt durch Umsetzen von einem ungesättigten Ester **AA** mit mindestens drei Hydroxylgruppen mit einem Säureanhydrid **AB** zu einer Polycarbonsäure **A1**, bevorzugt einer Tricarbonsäure, die im zweiten Schritt mit aliphatischen linearen oder verzweigten oder cycloaliphatischen Hydroxyverbindungen **AC** mit mindestens zwei, bevorzugt zwei bis vier, Hydroxylgruppen pro Molekül, oder einer Mischung von solchen Polyolen, mit difunktionellen aliphatischen, cycloaliphatischen oder aromatischen Carbonsäuren **AD,** aliphatischen oder aromatischen Monocarbonsäuren **AE** in bekannter Weise gegebenenfalls in Gegenwart von Veresterungskatalysatoren zu einem verzweigten Polyester kondensiert wird, der im dritten Schritt durch Reaktion mit einem Anhydrid einer Dicarbonsäure unter zumindest teilweisem Verbrauch der im Polyester vorhandenen Hydroxylgruppen modifiziert wird.

Die Polyester **A** enthalten pro Molekül im Durchschnitt mindestens eine, bevorzugt mindestens zwei, und insbesondere mindestens drei Verzweigungsstellen. Sie weisen pro Molekül mindestens eine, bevorzugt mindestens zwei, und insbesondere mindestens drei olefinische Doppelbindungen pro Molekül auf. Es ist besonders bevorzugt, daß die Polyester **A** Bausteine abgeleitet von Ricinusöl enthalten.

Geeignete Verbindungen **AA** sind Ester von mindestens dreiwertigen aliphatischen Alkoholen mit Fettsäuren, wobei im Mittel mindestens eine olefinische Doppelbindung und mindestens drei Hydroxylgruppen in einem Estermolekül enthalten sein müssen. Im einfachsten Fall wird ein Ester von Glycerin mit drei Molekülen einer ungesättigten Fettsäure mit einer Hydroxylgruppe eingesetzt, beispielsweise Rizinusöl. Es ist ebenfalls möglich, Ester des Glycerins oder anderer mehrwertiger Alkohole mit einem Unterschuß an Fettsäuren zu verestern, die Hydroxylgruppen und olefinische Doppelbindungen enthalten, und die gebildeten Teilester, die mindestens drei Hydroxylgruppen enthalten, anschließend durch Reaktion mit einem Unterschuß an Säureanhydriden, die von den im zweiten Schritt eingesetzten Säureanhydriden **AB** verschieden sein können, zu ungesättigten Polyhydroxyverbindungen **AA** umzusetzen.

Geeignete Verbindungen **AB** sind Anhydride aliphatischer linearer oder cyclischer Dicarbonsäuren, wie Adipinsäureanhydrid, Glutarsäureanhydrid, Bernsteinsäureanhydrid, Hexahydrophthalsäureanhydrid, ungesättigte Anhydride wie Maleinsäureanhydrid und Tetrahydrophthalsäureanhydrid, und aromatische Säureanhydride wie Phthalsäureanhydrid.

Geeignete Verbindungen **AC** sind aliphatische Polyole mit zwei bis sechs, bevorzugt zwei bis vier Hydroxylgruppen je Molekül. Bevorzugt werden Mischungen von Triolen mit Dihydroxyverbindungen oder Hydroxyverbindungen mit mehr als drei Hydroxylgruppen. Dabei haben die Dihydroxyverbindungen bevorzugt 2 bis 10, insbesondere 2 bis 9 Kohlenstoffatomen wie Glykol, 1,2- und 1,3-Propandiol, 1,4-Butandiol, und 1,6-Hexandiol. Ebenso geeignet sind Oligoätherglykole, insbesondere die von Propylenglykol abgeleiteten Di-, Tri- und Tetrameren. Es lassen sich auch verzweigte Verbindungen wie Neopentylglykol und die isomeren Trimethylhexandiole einsetzen. Als Trihydroxyverbindungen mit 3 bis 10 Kohlenstoffatomen sind insbesondere Glycerin, Trimethylolpropan und Trimethyloläthan geeignet. Geeignete höherfunktionelle Alkohole sind Erythrit, Pentaerythrit, Ditrimethylolpropan und äthan, Diglycerin sowie die Zuckeralkohole wie Sorbit, Mannit und Xylit.

Geeignete Verbindungen **AD** sind die linearen oder verzweigten oder cyclischen aliphatischen oder aromatischen Dicarbonsäuren mit 2 bis 40 Kohlenstoffatomen, bevorzugt 4 bis 36 Kohlenstoffatomen. Bevorzugt werden gesättigte Verbindungen wie Bernsteinsäure, Glutarsäure, Adipinsäure, und die durch Dimerisiemng von ungesättigten Fettsäuren zugänglichen (Mischungen von) gesättigten gegebenenfalls verzweigten Dicarbonsäuren. Unter den cycloaliphatischen Dicarbonsäuren werden Hexahydrophthalsäure und 1,4-Cyclohexandicarbonsäure bevorzugt. Als aromatische Dicarbonsäuren kommen insbesondere Phthalsäure, Iso- und Terephthalsäure sowie 1,4- und 2,6-Naphthalindicarbonsäure in Betracht.

Geeignete Monocarbonsäuren **AE** sind aliphatische lineare oder verzweigte Verbindungen mit 6 bis 16, insbesondere 8 bis 14 Kohlenstoffatomen, wie zum Beispiel2-Äthylhexansäure und Caprinsäure, sowie aromatische Monocarbonsäuren, insbesondere Benzoesäure oder die Isomeren der Tolylsäure.

Geeignete Phenolharze **B** sind insbesondere Resole, unter diesen bevorzugt zumindest teilweise verätherte Resole, die durch Reaktion von Phenolen oder Mischungen von mehreren Phenolen mit mindestens einem an den aromatischen Kern in ortho- oder para-Stellung gebundenen Wasserstoffatom und Aldehyden, insbesondere Formaldehyd in bekannter Weise unter alkalischer Katalyse gebildet werden, und die anschließend im sauren Milieu mit linearen oder verzweigten aliphatischen Alkoholen mit 1 bis 6 Kohlenstoffatomen, insbesondere Methanol sowie n- und iso-Butanol veräthert werden. Besonders bevorzugt sind mit n- oder iso-Butanol verätherte Resole auf Basis von Formaldehyd, die mindestens einen Massenanteil an 20 % von Kresolen enthalten.

Unter "teilweise verätherten Resolen" werden solche Resole verstanden, deren Hydroxymethylgruppen zumindest zu 20 % mit den genannten aliphatischen Alkoholen veräthert sind.

Die Polyester **A** werden mit den Phenolharzen **B** und gegebenenfalls üblichen Additiven wie Verlaufsmittel, Vernetzungskatalysatoren und Lösungsmitteln zu Beschichtungsmitteln formuliert.

Die so formulierten Beschichtungsmittel werden bevorzugt zur Lackierung von Metallen, insbesondere zur Innenlackierung von Behältern aus Metall eingesetzt, besonders bevorzugt für Lebensmittelbehälter; nach Einbrennen bei 160 °C bis 230 °C ergeben sich goldfarbene Filme, die eine ausgezeichnete Haftung auf dem metallischen Untergrund auch bei mechanischer Beanspruchung und eine gute Beständigkeit gegen alle üblichen Füllgüter aufweisen.

Die Erfindung wird durch die nachfolgenden Beispiele erläutert.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiele

In den Beispielen werden die folgenden Abkürzungen für die Rohstoffe verwendet:

**Tabelle 1**

| Abkürzungen | | |
|---|---|---|
| Abkürzung | Bedeutung | molare Masse |
| PSA | Phthalsäureanhydrid | 148 g/mol |
| BSA | Bernsteinsäureanhydrid | 100 g/mol |
| TMP | Trimethylolpropan | 134 g/mol |
| PENTA | Pentaerythrit | 136 g/mol |
| TPG | Tripropylenglykol | 192 g/mol |
| DPG | Dipropylenglykol | 134 g/mol |
| BZS | Benzoesäure | 122 g/mol |
| IPS | Isophthalsäure | 166 g/mol |
| PS | Phthalsäure | 166 g/mol |
| THPSA | Tetrahydrophthalsäureanhydrid | 152 g/mol |
| BS | Bernsteinsäure | 118 g/mol |
| ADPS | Adipinsäure | 146 g/mol |
| RZ | Rizinusöl | 925 g/mol |
| TPS | Terephthalsäure | 166 g/mol |
| BG | Butylglykol | 118 g/mol |

### Beispiel 1 Herstellung der Polyester (PE)

### allgemeine Verfahrensvorschrift:

### Stufe 1 (Herstellung einer "Rizinusöl-Tricarbonsäure")

Rizinusöl wurde auf 80 °C erwärmt, unter Rühren wurde ein Säureanhydrid gemäß der Tabelle 2 zugegeben. Die Temperatur wurde unter ständigem Rühren innerhalb von ca. 3 Stunden auf 180 °C erhöht und dann gehalten, bis die Umsetzung vollständig war (der Reaktionsverlauf wurde anhand der Säurezahl verfolgt, ca. 3 h).

### Stufe 2 (Veresterung)

Zu dem Produkt aus dem Schritt 1 wurden die in der Tabelle 2 angegebenen Hydroxyverbindungen und Säuren zugegeben und die Temperatur innerhalb von ca. vier Stunden auf 240 °C gesteigert. Unter Abtrennung des sich bildenden Reaktionswassers wurde so lange verestert, bis eine Säurezahl von weniger als 5 mg/g erreicht war.

### Stufe 3 (Anhydrid-Anlagerung)

Anschließend wurde das Produkt aus Schritt 2 auf 125 °C abgekühlt und ein weiteres Anhydrid gemäß der Tabelle 2 dazugegeben. Bei dieser Temperatur wurde solange gehalten, bis ein Säurezahl-Wert von 40 bis 80 mg/g erreicht war. Zum Schluß wurde der Ansatz mit Butylglykol auf einen Festkörper-Massenanteil von 60 % verdünnt.

Gemäß den Angaben in Tabelle 2 wurden gemäß diesem Procedere die Polyester (PE 1.1 bis PE 1.7) hergestellt.

**Tabelle 2**

| Herstellung der Polyester PE 1.1 bis 1.7 (angegeben sind die Massen der Stoffe in g) | | | | | | | | |
|---|---|---|---|---|---|---|---|---|
| Beispiel | Rohstoff | 1.1 | 1.2 | 1.3 | 1.4 | 1.5 | 1.6 | 1.7 |
| Stufe 1 | RZ | 925 | 878 | 1017 | 925 | 832 | 925 | 925 |
| | PSA | 444 | 422 | | | 400 | 444 | 444 |
| | THPSA | | | 502 | | | | |
| | BSA | | | | 300 | | | |
| Stufe 2 | TMP | 670 | 536 | 536 | 670 | 402 | 402 | 402 |
| | PENTA | 163 | 245 | | | 245 | 340 | 299 |
| | DPG | | | | | | | 214 |
| | TPG | | | 384 | | | | |
| | PS | | | | | | | 349 |
| | IPS | 365 | | | 365 | 332 | 365 | |
| | TPS | | 266 | | | | | |
| | ADPS | | | 292 | | | | |
| | BZS | 403 | 281 | 183 | 244 | 378 | 427 | 244 |
| Stufe 3 | PSA | 385 | 440 | | 414 | 440 | 592 | 592 |
| | THPSA | | | 380 | | | | |
| Festharz | | 3355 | 3068 | 3294 | 2918 | 3029 | 3491 | 3509 |

An den so hergestellten Harzen wurden die folgenden Kennwerte ermittelt:

**Tabelle 3**

| Charakteristika der Harze 1.1 bis 1.7 | | | | | | | |
|---|---|---|---|---|---|---|---|
| | 1.1 | 1.2 | 1.3 | 1.4 | 1.5 | 1.6 | 1.7 |
| Säurezahl in mg/g | 47 | 59 | 46 | 58 | 59 | 68 | 73 |
| Hydroxylzahl in mg/g | 112 | 147 | 84 | 58 | 67 | 70 | 124 |
| Viskosität* in mPa·s | 630 | 695 | 492 | 731 | 833 | 1082 | 982 |

| | | | | | | | |
|---|---|---|---|---|---|---|---|
| * Viskosität gemessen nach DIN EN ISO 3219 bei 23 °C und 25 s⁻¹ an der Harzlösung in Lieferform (60 %ige Lösung in Butylglykol) | | | | | | | |

### Beispiel 2 Herstellung eines verätherten Resols auf der Basis von o-Kresol

108 g o-Kresol wurden zusammen mit 18,18 g Natronlauge (33 %ige wäßrige Lösung) sowie 138 g einer 37 %-igen wäßrigen Formaldehydlösung auf 80 °C erhitzt und solange bei dieser Temperatur gehalten, bis die Formaldehydkonzentration auf weniger als 2 % gesunken war. Danach wurden 29,4 g Schwefelsäure (25 %ige wäßrige Lösung) zur Einstellung eines pH-Wertes von 5 bis 6 hinzugegeben. Nach der pH-Einstellung ließ man die Unterlauge bei 80 °C absetzen. Nach Abtrennen der Unterlauge wurde der Ansatz bei 80 °C mit 40 g Wasser gewaschen und anschließend das Waschwasser wieder abgetrennt. Nach Beendigung des Waschvorgangs wurden 120 g n-Butanol dem Ansatz zugegeben und während 15 h an einem Wasserabscheider destilliert.

Nach Einstellung des Festkörper-Massenanteils (Bestimmungsmethode analog DIN EN 3251) der Harzlösung mit Butanol auf 80 % wurde der Ansatz mittels einer Filtration von abgeschiedenen Feststoffen (Salzen) befreit.

Die erhaltene 80 %ige Harzlösung in n-Butanol ist ein mit Butanol veräthertes o-Kresol-Resol.

### Beispiel 3 Lackvergleich

Es wurden Mischungen hergestellt aus dem Phenolharz des Beispiels 2 und dem Polyester des Beispiels 1.1 (Lack 1). Zum Vergleich wurden Mischungen desselben Phenolharzes mit einem linearen Polyester (Vergleichsbeispiel 2, Lack 2) und Epoxidharzen des Typs 7 (Lack 3) und 9 (Lack 4) hergestellt und durch Zugabe von Lösungsmittel auf dieselbe Applikationsviskosität eingestellt. Dabei waren in den Mischungen Lack 1 bis Lack 4 die Massenverhältnisse von Phenolharz zu Zumischharz (Polyester- bzw. Epoxid-Harz) jeweils konstant. Mit diesen Lacken wurde für die Dosenherstellung übliches Weißblech beschichtet, die Lackschicht wurde anschließend bei 200 °C während 12 Minuten eingebrannt. Der gehärtete Lackfilm (Trockenfilmdicke ca. 5 µm) war in allen Fällen goldgelb.

**Tabelle 4**

| Lackformulierungen (Masse der Feststoffe in g) und Ergebnisse | | | | |
|---|---|---|---|---|
| | Lack 1 | Lack 2 | Lack 3 | Lack 4 |
| Phenolharz | 16,45 | 15,00 | 11,74 | 10,52 |
| Zumischharz | 38,37 | 34,38 | 27,32 | 24,48 |
| Lösungsmittel¹ | 45,18 | 50,62 | 60,94 | 65,00 |
| Festkörper-Massenanteil | 55 % | 50 % | 39 % | 35 % |
| "wedge bend test" ² | 75 % | 50 % | 65 % | 75 % |
| Sterilisation, Deckfläche ³ | i. O. | 1. A. | 1. A. | 1. A. |
| Sterilisation, Flanke ³ | 1. R. | Risse | 1. R. | 1. R. |
| Sterilisation, Deckfläche ⁴ | i. O. | 1. A. | 1. A. | 1. A. |
| Sterilisation, Flanke ⁴ | 1. R. | Risse | 1. R. | 1. R. |
| Sterilisation, Gitterschnitt ⁵ | 0 | 0 | 0 | 0 |
| Sterilisation, Oberfläche ⁵ | i. O. | Anlaufen | 1. A. | 1. A. |
| Schwefel-Flecken-Test⁶ | 2 | 5 | 3 bis 4 | 3 |
| Erläuterung der Abkürzungen: 1. A. Leichtes Anlaufen 1. R. Leichte Rauhigkeit i. O. In Ordnung | | | | |

| | | | | |
|---|---|---|---|---|
| 1 Lösungsmittelgemisch Butanol/Methoxypropanol, jeweils eingestellt auf gleiche Applikationsviskosität | | | | |
| 2 Das beschichtete Blech wird über eine 90°-Kante gebogen und anschließend 5 Minuten einer Lösung von 132 g Kupfersulfat-Pentahydrat und 20 g conc. Salzsäure in 900 g destillierten Wasser ausgesetzt; es wird der Anteil der nicht korrodierten Biegekanten angegeben | | | | |
| 3 Sterilisationstest in 2 %iger wäßriger Milchsäurelösung bei 129 °C während einer Stunde, an Bechern mit 5 cm Durchmesser und 2,5 cm Höhe, Angabe des Aussehens der Deckfläche und der Flanken | | | | |
| 4 Sterilisationstest in 2 %iger wäßriger Milchsäurelösung bei 129 °C während einer Stunde, an Bechern mit 4 cm Durchmesser und 3,5 cm Höhe, Angabe des Aussehens der Deckfläche und der Flanken | | | | |
| 5 Sterilisationstest in 2 %iger wäßriger Milchsäurelösung bei 129 °C während einer Stunde an flachen Blechen, Ergebnisse bei Gitterschnitt und Aussehen der Oberfläche | | | | |
| 6 Schwefelfleckentest ("sulphur staining resistance"), Sterilisationstest in 0,05 %iger wäßriger Cystein-Lösung bei 121 °C während neunzig Minuten an flachen Blechen, Ergebnisse bei Gitterschnitt und Aussehen der Oberfläche | | | | |

### Gitterschnitt: "A0": keine Korrosion und Unterrostung, bis "A5": stärke Korrosion und Unterrostung

Es ist zu erkennen, daß bei gleicher Applikationsviskosität gegenüber den Epoxidharz-Formulierungen ein erhöhter Festkörper-Massenanteil zu realisieren ist, die Ergebnisse im Sterilisationstest sind sogar noch verbessert. Selbstverständlich besteht ein wesentlicher Vorteil darin, daß aus den Lackschichten mit der erfindungsgemäßen Bindemittelmischung kein BADGE mehr extrahierbar ist. Gegenüber Formulierungen mit linearen Polyestern als Zumischharz ist überraschend, daß die Ergebnisse im "wedge bend test" und im Sterilisationstest erheblich verbessert sind. Bemerkenswert ist auch das schlechte Abschneiden der Formulierung mit dem linearen Polyester bei dem "Schwefel-Flecken-Test".

Bei der Erprobung des Einsatzes von linearen Polyestern anstelle der herkömmlicherweise verwendeten Epoxidharze als Zumischharze hätte der Fachmann daher die Gruppe der Polyester als ungeeignet verworfen. Es war überraschend und nicht vorhersehbar, daß sich bei Kombinationen von Phenolharzen mit den erfindungsgemäßen verzweigten, Säuregruppen enthaltenden Polyestern derart gute Ergebnisse zeigen, die denen der herkömmlichen Mischungen mit Epoxidharzen gleichwertig oder sogar überlegen sind (Sterilisationstest).

## Patentansprüche

1. Mischungen enthaltend Phenolharze **B** und verzweigte hochmolekulare olefinisch ungesättigte Polyester **A** mit freien Carboxylgruppen.

2. Mischungen nach Anspruch 1, **dadurch gekennzeichnet, daß** die Polyester **A** Bausteine abgeleitet von Ricinusöl enthalten.

3. Mischungen nach Anspruch 1, **dadurch gekennzeichnet, daß** die Masse m(**A**) des Polyesters **A** zur Masse m(**B**) der Phenolharze **B** sich verhält wie (50 bis 90) : (50 bis 10).

4. Mischungen nach Anspruch 1, **dadurch gekennzeichnet, daß** die Polyester **A** eine Säurezahl von 15 mg/g bis 200 mg/g und eine Hydroxylzahl von 20 mg/g bis 200 mg/g aufweisen.

5. Mischungen nach Anspruch 1, **dadurch gekennzeichnet, daß** die Polyester **A** Bausteine von Dicarbonsäuren ausgewählt aus Phthalsäure, Tetrahydrophthalsäure und Bernsteinsäure enthalten.

6. Mischungen nach Anspruch 1, **dadurch gekennzeichnet, daß** die Polyester **A** Bausteine von Polyolen **AB** ausgewählt aus Trimethylolpropan und Pentaerythrit enthalten.

7. Mischungen nach Anspruch 1, **dadurch gekennzeichnet, daß** die Polyester **A** Bausteine abgeleitet von aromatischen oder aliphatischen Monocarbonsäuren enthalten.

8. Verfahren zur Herstellung von Mischungen nach Anspruch 1, **dadurch gekennzeichnet, daß** Phenolharze **B** vermischt werden mit Polyestern **A**, die hergestellt werden in einer mehrstufigen Reaktion
- durch Umsetzen von Estern enthaltend mindestens eine olefinische Doppelbindung mindestens drei Hydroxylgruppen mit einem Säureanhydrid **AB** zu einer Polycarbonsäure **A1,**
- Kondensation der Polycarbonsäure **A1** mit aliphatischen linearen oder verzweigten oder cycloaliphatischen Hydroxyverbindungen **AC** mit mindestens zwei Hydroxylgruppen pro Molekül, oder einer Mischung von solchen Polyolen, mit difunktionellen aliphatischen, cycloaliphatischen oder aromatischen Carbonsäuren **AD**, sowie aliphatischen oder aromatischen Monocarbonsäuren **AE** zu einem Polyester, und
- Reaktion des Polyesters des zweiten Schritts mit einem Anhydrid **AB** einer Dicarbonsäure unter zumindest teilweisem Verbrauch der im Polyester vorhandenen Hydroxylgruppen.

9. Verwendung der Mischungen nach Anspruch 1 zum Beschichten von Metallen.

10. Verwendung nach Anspruch 9 für Innenbeschichtungen von Lebensmittelbehältern.
